# EUROPÄISCHE PATENTSCHRIFT

(11) **EP 3 354 624 B1**
(45) Veröffentlichungstag und Bekanntmachung des Hinweises auf die Patenterteilung: **10.07.2019**
(21) Anmeldenummer: 18163277.9
(22) Anmeldetag: 28.11.2014
(51) Int. Cl.: C02F 1/66, C02F 1/72, C07C 45/65, C02F 1/04, C02F 1/76, C02F 1/78, C02F 101/38, C02F 103/36

(54) **VERFAHREN ZUR AUFARBEITUNG VON VERUNREINIGTEM ABWASSER AUS DER HERSTELLUNG VON ISOPHORONNITRIL**
METHOD FOR THE TREATMENT OF CONTAMINATED WASTE WATER DERIVED FROM THE PREPARATION OF ISOPHORONNITRILE
PROCÉDÉ DE TRAITEMENT D'EAUX USÉES POLLUÉES À PARTIR DE LA FABRICATION D'ISOPHORONE-NITRILE

(43) Veröffentlichungstag der Anmeldung: 01.08.2018
(62) Teilanmeldung aus: 14195357.0
(73) Patentinhaber: Evonik Degussa GmbH, 45128 Essen (DE)
(72) Erfinder: KRECZINSKI, Manfred, 44652 Herne (DE); JANSEN, Robert, 46244 Bottrop (DE); WOYCIECHOWSKI, Matthias, 63505 Langenselbold (DE)
(74) Vertreter: Evonik Patent Association

(56) Entgegenhaltungen:
- DE-A1- 4 428 413
- US-A1- 2013 253 226

## Beschreibung

Die Erfindung betrifft ein Verfahren zur Aufarbeitung von verunreinigtem Abwasser aus der Herstellung von Isophoronnitril.

### Stand der Technik

Aus der WO 2012/076317 (PCT/EP2011/070442) ist ein Verfahren zur Herstellung von 3-Aminomethyl-3,5,5-trimethylcyclohexylamin bekannt. Aus der DE 44 28 413 A1 ist ein Verfahren zur Reinigung von Abwässern aus der Herstellung von Isophoron, Isophoronnitril und Isophorondiamin bekannt.

Detailliert beschrieben wird ein dreistufiges Verfahren zur Herstellung von 3-Aminomethyl-3,5,5-trimethylcyclohexylamin, nachfolgend Isophorondiamin oder abgekürzt IPDA genannt, durch
I. Herstellung von Isophoron durch katalysierte Aldol-Kondensationen mit Aceton als Edukt;
II. Umsetzung von Isophoron mit Blausäure unter Bildung von Isophoronnitril (IPN, 3-Cyano-3,5,5-Trimethylcyclohexanon);
III. Katalytische Hydrierung und/oder katalytische reduktive Aminierung (auch als aminierende

Hydrierung bezeichnet) von 3-Cyano-3,5,5-trimethylcyclohexanon, nachfolgend Isophoronnitril oder abgekürzt IPN genannt, zum Isophorondiamin.

Am Ende aller drei Stufen fällt ein Abwasser mit den entsprechenden Endprodukten und auch Ausgangstoffen an.

Aufgabe der vorliegenden Erfindung war, ein Verfahren zur Aufarbeitung der mit Isophoron, Isophoronnitril, Isophorondiamin, Blausäure oder Salze der Blausäure, sowie gegebenenfalls weiteren Stoffen, verunreinigtem Abwasser zu finden, wobei das dadurch erhaltene behandelte Abwasser einer biologischen Abwasseraufbereitung zugeführt werden kann. Speziell Isopohoronnitril zeigt eine schlechte biologische Abbaubarkeit. Anhand der Abbautests gemäß DIN EN ISO 9888, wurde das Isophoron - Abwasser mit einer CSB Reduzierung <15% als biologisch nicht abbaubar eingestuft.

Es wurde gefunden, dass das Verfahren gemäß dieser Erfindung die Aufgabe löst.

Gegenstand der Erfindung ist ein Verfahren zur Aufarbeitung von verunreinigtem Abwasser aus der Herstellung von Isophoronnitril,
wobei dieses Abwasser insbesondere Isophoron, Isophoronnitril, Isophorondiamin, Blausäure oder Salze der Blausäure oder Ammoniumsalze enthält,
durch
Behandlung des Abwassers aus der Herstellung von Isophoronnitril aus der Umsetzung von Isophoron mit Blausäure durch Oxidation.

Das bei der Herstellung von Isophoronnitril anfallende Abwasser, mit einem pH Wert von 1 bis 2, enthält neben anderen Komponenten aus dem Prozess, ∼ 2000 ppm Isophoronnitril.
Das enthaltene Isophoronnitril muss entfernt werden, damit das Abwasser in die biologische Abwasserreinigungsanlage eingeleitet werden darf.

Aufgabe war es, den Isophoronnitrilgehalt signifikant zu reduzieren um das Abwasser direkt der biologischen Abwasserreinigungsanlage zuführen zu können.

### Beschreibung der Oxidation.

Das Verfahren ist dadurch gekennzeichnet, dass das Abwasser aus der Herstellung von Isophoronnitril aus der Umsetzung von Isophoron mit Blausäure durch eine Oxidation derart aufgearbeitet werden, wodurch eine signifikante CSB-Verminderung (CSB = chemischer Sauerstoffbedarf, gemäß DIN 38409 H41) erfolgt, enthaltene Blausäure oder deren Salze unter Bildung von Kohlendioxid oxidiert werden, Ammoniumverbindungen eliminiert werden können und das resultierende Abwasser zur weiteren Behandlung in eine biologische Abwasserreinigungsanlage eingeleitet werden darf. Die Kombination der Verfahrensschritte ermöglicht eine weitergehende Reinigung als nur durch einen Schritt z. B. eine biologische Reinigung selbst. Bevorzugt wird eine signifikante CSB-Verminderung von mindestens 50%, besonders bevorzugt von 70% durch die Oxidation erreicht.

Der Oxidationsschritt ist dadurch gekennzeichnet, dass als Oxidationsmittel Substanzen wie Wasserstoffperoxid, aktiviertes Wasserstoffperoxid (aktiviert durch Eisen, UV oder Ozon), Karoat, vorzugsweise aber Natriumhypochloritlösung oder durch Chloreindüsung in situ erzeugtes Hypochlorit eingesetzt werden kann. Des Weiteren kann die Oxidation durch Chlordioxid erfolgen.

Die Oxidation kann in einem weiten pH Bereich ausgeführt werden, vorzugsweise zwischen pH 11 und pH 5, beginnend mit einem höheren pH-Wert und anschließender Verschiebung zu niedrigeren pH-Werten, während des Oxidationsprozesses z. B. durch eine Kaskade aus 3 Reaktoren, in denen dann unterschiedliche pH Werte eingestellt werden.

Das Oxidationsverfahren ist des Weiteren dadurch gekennzeichnet, dass es bei Umgebungstemperaturen als auch erhöhten Temperaturen zur Erhöhung der Reaktionsgeschwindigkeit durchgeführt werden kann. Der bevorzugte Temperaturbereich während der Oxidation liegt dabei zwischen 10 und 50 °C.

Gegenstand der Erfindung ist auch ein Verfahren, dadurch gekennzeichnet, dass
das Abwasser anschließend an das oben beschriebene Verfahren einer biologischen Abwasserbehandlung unterworfen wird.

Die Erfindung wird durch die folgenden Beispiele näher erläutert.

### Beispiele

Beispiele 1-4 gehören nicht zur Erfindung.

### Beispiel 1

### Batchhydrolyse

In einer Hydrolysekolonne wurde ein synthetisches Abwasser mit 12 g Isophoronnitril gelöst in 1500 g Wasser, mit 7 g NaOH auf einen pH Wert von 13 eingestellt und 2 Stunden bei 100 °C unter Rückfluss gehalten. Die anschließende GC Analyse des Sumpfproduktes zeigte einen Isophoronnitrilgehalt von 2 mg/l.

Während der Hydrolyse wurden 100 ml abdestilliert und die GC Analyse des Destillats zeigte einen Isophorongehalt von 1385 mg/l.

Das so erhaltene Abwasser (Sumpfprodukt) konnte in der nachgeschalteten biologischen Abwasserreinigung ohne Probleme aufgearbeitet werden.

### Beispiel 2

### Kontinuierliche Hydrolyse bei pH 13,7

In den Sumpf der Hydrolysekolonne wurden kontinuierlich 750 ml/h Abwasser aus einer Prozessanlage mit einem Isophoronnitrilgehalt von 1885 mg/l gefahren.

Über eine Sumpfstandsregelung wurde eine Verweilzeit im Sumpf von 1,5 Stunden eingestellt und der pH Wert im Sumpf durch Dosierung von 20%iger NaOH auf pH 13,7 eingestellt.

Die Temperatur im Sumpf der Kolonne betrug 102 °C.

Über einen Zeitraum von 6,5 Stunden wurden so 4875 ml Prozessabwasser durch die Hydrolysekolonne gefahren. Die GC Analyse des ablaufenden Sumpfproduktes zeigte noch einen Rest-Isophoronnitrilgehalt von 1 mg/l und einen Isophorongehalt von 83 mg/l.

In den 6,5 Stunden wurden am Kopf der Kolonne 340 ml Destillat abgezogen. Die GC Analyse zeigte eine Isophorongehalt von 14900 mg/l.

### Bilanzierung:

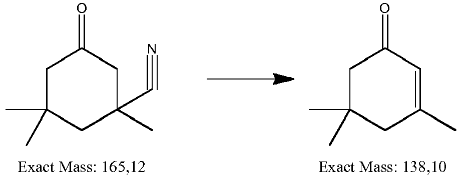

pro 1000 mg IPN können 836 mg IP entstehen
Einsatz IPN: 4,875 l* 1885 mg/l = 9189 mg IPN; => 7682 mg IP
Austrag an IP
   1. Im Destillat: 340 ml *14900 mg/l /1000 = 5066 mg IP
   2. Im Sumpf: 4535 ml* 83 mg/l/1000 = 376 mg IP
70,8 % der theoretisch möglichen Isophoronmenge konnten analytisch nachgewiesen werden.

### Beispiel 3

Kontinuierliche Hydrolyse bei pH 11

In den Sumpf der Hydrolysekolonne wurden kontinuierlich 750 ml/h Abwasser aus einer Prozessanlage mit einem Isophoronnitrilgehalt von 1885 mg/l gefahren.

Über eine Sumpfstandsregelung wurde eine Verweilzeit im Sumpf von 1,5 Stunden eingestellt und der pH Wert im Sumpf durch Dosierung von 20%iger NaOH auf pH 11 eingestellt.

Die Temperatur im Sumpf der Kolonne betrug 102°C.

Über einen Zeitraum von 6,0 Stunden wurden so 4500 ml Prozessabwasser durch die Hydrolysekolonne gefahren. Die GC Analyse des ablaufenden Sumpfproduktes zeigte noch einen Rest-Isophoronnitrilgehalt von 620 mg/l und einen Isophorongehalt von 53 mg/l.

### Beispiel 4

Kontinuierliche Hydrolyse bei pH 9

In den Sumpf der Hydrolysekolonne wurden kontinuierlich 750 ml/h Abwasser aus einer Prozessanlage mit einem Isophoronnitrilgehalt von 1885 mg/l gefahren.

Über eine Sumpfstandsregelung wurde eine Verweilzeit im Sumpf von 1,5 Stunden eingestellt und der pH Wert im Sumpf durch Dosierung von 20%iger NaOH auf pH 9 eingestellt.

Die Temperatur im Sumpf der Kolonne betrug 102 °C.

Über einen Zeitraum von 5,0 Stunden wurden so 3750 ml Prozessabwasser durch die Hydrolysekolonne gefahren. Die GC Analyse des ablaufenden Sumpfproduktes zeigte noch einen Rest-Isophoronnitrilgehalt von 1284 mg/l und einen Isophorongehalt von 15 mg/l.

### GC-Analyse:

| | | | |
|---|---|---|---|
| ***GC-Einstellungen*** | Agilent 6890N | | |
| ***Software Chromeleon*** | EXTRELUT | | |
| ***Trennsäulen*** | HP-5 | Fused Silica Kapillare: | 30 m; 0,25 mm ID; 0,25 µm Filmdicke |
| ***Temperaturen*** | Injektor | 250°C | |
| | Detektor (FID) | 250°C | |
| | Ofen | 80°C // 4 min // 7°C 17 min /min // 180°C // | |
| ***Trägergas*** | Helium | 17 psi Säulendruck | |
| | Splitausgang | 16 ml/min | Septumspülung 2,0 ml/min |
| ***Brenngase*** | 35ml/min Wasserstoff | 300 ml/min Luft up-Gas | 20m/min Make |
| | | | verd. |
| ***Geräte* / *Reagenzien*** | Extrelutsäulen NT1 Fa.Merck | Standardlsg. 3,0 mg n-C ₁₄H₃₀ in 6ml CCl₄ | |
| | | | |
| ***Probenvorbereitung*** | 100 ml Probe werden mit HCl-Lsg. auf pH 2 eingestellt (Verdünnungsfaktor). Die Extrelutsäule NT1 wird auf die Analysenwaage gestellt, 1ml der sauer eingestellten Probe aufgegeben und ausgewogen. 10 min. einwirken und mit 6 ml Standardlösung eluiert. Das Eluat wird in einem 10ml Messzylinder aufgefangen, die Menge Eluat abgelesen und 2µL in den GC injiziert. | | |
| | | | |
| ***Injektionsvolumen*** | 2,0 µl Probe - Lsg. | | |
| | Methode Innerer-Standard | | |
| ***Auswertung*** | Ergebnis = mg C₁₄(=ml Eluat x 0,5) x Ai x RRF x Verd.Faktor x 10⁶/(Einwaage in mg x Astd) | | |

### Beispiele zur Oxidation.

### Beispiel 5

Ein Abwassergemisch aus der Produktion von Isophoron, Isophoronnitril, Isophorondiamin, gekennzeichnet durch eine CSB-Konzentration von 3170 mg/l, wurde auf 40 °C aufgeheizt und mit einer ca. 10%igen Natriumhypochloritlösung zur Reaktion gebracht. Der pH-Wert in der Mischung zu Reaktionsbeginn betrug 12,9; die Temperatur 40 °C. Im Verlauf von ca. 3 Stunden sank der pH-Wert auf 9,3 und wurde anschließend mit Schwefelsäure auf einen pH-Wert von 7,7 abgesenkt. Nach einer weiteren Stunde Reaktionszeit wurde die Reaktion gestoppt, indem der verbliebene Rest an Natriumhypochlorit mit Natriumsulfit zerstört wurde. Die nach der Reaktion gemessene CSB-Konzentration, gemessen mit Hach Lange Küvettentests, lag in diesem Versuch bei 1240 mg/l entsprechend einer CSB-Eliminierungsrate von 60,8 %. In einem nachfolgenden statischen biologischen Abbautest zur Simulation einer biologischen Abwasserreinigungsanlage konnte ein verbesserter CSB-Abbau von 46 % gegenüber 36 % aus der unbehandelten Abwassermischung ermittelt werden. Bezüglich des NH4-N Gehaltes (Ammonium-Stickstoff) konnte dieser im Rahmen der oxidativen Behandlung auf eine Konzentration von < 5 mg/l NH4-N verringert werden. Mit Hach Lange Küvettentests gemessen.

Für Abwassereinleitungen in Gewässer sind vom Gesetzgeber bestimmte Grenzwerte für Stickstoff - Verbindungen festgelegt.
Das Ziel für den Grenzwert für NH4N im Abwasser aus der Kläranlage beträgt erfindungsgemäß kleiner oder gleich 10 mg/l. Mit Hach Lange Küvettentests gemessen.
Während der biologischen Abwasserreinigung wird dann NH4-N unter Sauerstoffzufuhr über NO2-N zu NO3-N umgewandelt.

### Beispiel 6

Ein Abwasser aus einer Isophoronnitrilproduktion, gekennzeichnet durch einen CSB-Gehalt von 4900 mg/l, wurde auf ca. 40 °C aufgeheizt und mit einer ca. 10%igen Natriumhypochloritlösung zur Reaktion gebracht. Der pH-Wert in der Mischung zu Reaktionsbeginn betrug 11,3; die Temperatur 40 °C. Nach jeweils einer bzw. zwei Stunden Reaktionszeit wurde Hypochloritlösung nachdosiert und der pH-Wert bei Bedarf mit NaOH in Richtung pH ∼ 10 korrigiert. Nach ca. 3 Stunden Reaktionszeit wurde der pH-Wert mit Schwefelsäure auf einen pH-Wert von 7,3 abgesenkt. Im Verlauf einer weiteren Stunde Reaktionszeit sank der pH-Wert auf ca. 6,7. Anschließend wurde die Reaktion gestoppt, indem der verbliebene Rest an Natriumhypochlorit mit Natriumsulfit zerstört wurde. Die nach der Reaktion gemessene CSB-Konzentration gemessen mit Hach Lange Küvettentests lag in diesem Versuch bei 1300 mg/l entsprechend einer CSB-Eliminierungsrate von 73 %. In einem nachfolgenden statischen biologischen Abbautest zur Simulation einer biologischen Abwasserreinigungsanlage konnte ein verbesserter CSB-Abbau von 50 % gegenüber 14 % aus dem unbehandelten Abwasser ermittelt werden.

Bezüglich des NH4-N Gehaltes konnte dieser im Rahmen der oxidativen Behandlung auf eine Konzentration von < 5 mg/l NH4-N verringert werden. Mit Hach Lange Küvettentests gemessen.

### Meßmethode:

Hach Lange Küvettentest gemessen gemäß ISO 6060-1989, DIN 38409-H41-H44.

## Patentansprüche

1. Verfahren zur Aufarbeitung von verunreinigtem Abwasser aus der Herstellung von Isophoronnitril, durch
Behandlung des Abwassers aus der Herstellung von Isophoronnitril aus der Umsetzung von Isophoron mit Blausäure durch eine Oxidation mit einem Oxidationsmittel ausgewählt aus Wasserstoffperoxid, aktiviertem Wasserstoffperoxid (aktiviert durch Eisen, UV oder Ozon), Karoat, Natriumhypochloritlösung durch Chloreindüsung in situ erzeugtem Hypochlorit, und Chlordioxid.

2. Verfahren nach Anspruch 1, **dadurch gekennzeichnet, dass** dieses Abwasser Isophoron, Isophoronnitril, Isophorondiamin, Blausäure oder Salze der Blausäure, Ammoniumsalze enthält.

3. Verfahren nach mindestens einem der vorherigen Ansprüche, **dadurch gekennzeichnet, dass** die Oxidation in einem pH Bereich zwischen pH 11 und pH 5 durchgeführt wird.

4. Verfahren nach mindestens einem der vorherigen Ansprüche, **dadurch gekennzeichnet, dass** die Oxidation in einem pH Bereich zwischen pH 11 und pH 5 durchgeführt wird in einer Kaskade aus 3 Reaktoren, in denen die unterschiedliche pH Werte eingestellt werden.

5. Verfahren nach mindestens einem der vorherigen Ansprüche, **dadurch gekennzeichnet, dass** die Oxidation in einem Temperaturbereich zwischen 10 und 50 °C durchgeführt wird.

6. Verfahren nach Anspruch 1 bis 5, **dadurch gekennzeichnet, dass** das Abwasser anschließend einer biologischen Abwasserbehandlung unterworfen wird.

## Claims

1. Method for processing contaminated wastewater from the preparation of isophoronenitrile
by
treating the wastewater from the preparation of isophoronenitrile from the reaction of isophorone with hydrogen cyanide by an oxidation with an oxidizing agent selected from hydrogen peroxide activated hydrogen peroxide (activated by iron, UV or ozone), Caroat, sodium hypochlorite solution, hypochlorite produced in situ by chlorine injection, and chlorine dioxide.

2. Method according to Claim 1, **characterized in that** this wastewater comprises isophorone, isophoronenitrile, isophoronediamine, hydrogen cyanide or salts of hydrogen cyanide, ammonium salts.

3. Method according to at least one of the preceding claims, **characterized in that**
the oxidation is conducted within a pH range between pH 11 and pH 5.

4. Method according to at least one of the preceding claims, **characterized in that**
the oxidation is conducted within a pH range between pH 11 and pH 5 in a cascade composed of 3 reactors in which the different pH values are established.

5. Method according to at least one of the preceding claims, **characterized in that**
the oxidation is conducted within a temperature range between 10 and 50°C.

6. Method according to Claims 1 to 5, **characterized in that** the wastewater is subsequently subjected to a biological wastewater treatment.

## Revendications

1. Procédé pour le traitement d'eaux usées polluées provenant de la préparation de nitrile d'isophorone par
traitement des eaux usées, provenant de la préparation de nitrile d'isophorone provenant de la transformation d'isophorone, avec de l'acide cyanhydrique par une oxydation avec un oxydant choisi parmi le peroxyde d'hydrogène, le peroxyde d'hydrogène activé (activé par du fer, des rayons UV ou de l'ozone), le Caroat, une solution d'hypochlorite de sodium, l'hypochlorite généré in situ par injection de chlore et le dioxyde de chlore.

2. Procédé selon la revendication 1, **caractérisé en ce que** ces eaux usées contiennent de l'isophorone, du nitrile d'isophorone, de l'isophoronediamine, de l'acide cyanhydrique ou des sels de l'acide cyanhydrique, des sels d'ammonium.

3. Procédé selon au moins l'une quelconque des revendications précédentes, **caractérisé en ce que** l'oxydation est réalisée dans une plage de pH entre pH 11 et pH 5.

4. Procédé selon au moins l'une quelconque des revendications précédentes, **caractérisé en ce que** l'oxydation est réalisée dans une plage de pH entre pH 11 et pH 5 dans une cascade de 3 réacteurs, dans lesquels les valeurs différentes de pH sont réglées.

5. Procédé selon au moins l'une quelconque des revendications précédentes, **caractérisé en ce que** l'oxydation est réalisée dans une plage de température entre 10 et 50°C.

6. Procédé selon la revendication 1 à 5, **caractérisé en ce que** les eaux usées sont ensuite soumises à un traitement biologique des eaux usées.
